# EUROPÄISCHE PATENTSCHRIFT

(11) **EP 3 203 832 B1**
(45) Veröffentlichungstag und Bekanntmachung des Hinweises auf die Patenterteilung: **22.08.2018**
(21) Anmeldenummer: 15775187.6
(22) Anmeldetag: 02.10.2015
(51) Int. Cl.: A01K 13/00, A01L 3/00, A01L 5/00

(54) **HUFSCHUH FÜR EIN HUFTIER, VORZUGSWEISE EIN PFERD**
SHOE FOR A HOOFED ANIMAL, PREFERABLY A HORSE
CHAUSSURE POUR UN ONGULÉ, DE PRÉFÉRENCE UN CHEVAL

(30) Priorität: 10.10.2014 CH 15542014; 14.04.2015 CH 5222015
(43) Veröffentlichungstag der Anmeldung: 16.08.2017
(73) Patentinhaber: Swiss Galoppers GmbH, 8104 Weiningen (CH)
(72) Erfinder: EBERLE, Armin, 8507 Hörhausen (CH); MARAFFIO, Enrico, 5507 Mellingen (CH)
(74) Vertreter: Luchs, Willi
(86) Internationale Anmeldenummer: PCT/EP2015/072861
(87) Internationale Veröffentlichungsnummer: WO 2016/055387

(56) Entgegenhaltungen:
- EP-A2- 1 210 873
- WO-A1-00/16614
- FR-A- 566 048
- GB-A- 240 385
- GB-A- 2 432 293
- US-A- 6 062 008

## Beschreibung

Die Erfindung bezieht sich auf einen Hufschuh für ein Huftier, vorzugsweise ein Pferd, nach dem Oberbegriff des Anspruchs 1.
Derartige Hufschuhe dienen bekanntlich zum Schutz des Hufes vor Verschleiss und Verletzung des Hufhorns, insbesondere auf steinigem, rauen oder festem Untergrund. Bei Krankheit, zum Beispiel brüchigem Horn, oder Verletzung werden solche Hufschuhe für die Genesung des Hufs ebenfalls verwendet. Mit einem solchen Schuh besteht ein Schutz in dem Sinne, dass das Hufhorn nicht verletzt wird. Zudem kann es vorkommen, dass das Horn am Huf sehr weich ist und das Huftier somit die Hufeisen ständig verlieren würde.
Hufschuhe sind eine Alternative zu den herkömmlichen Hufeisen. Sie haben gegenüber diesen den Vorteil, dass sie leicht an- und ausziehbar sind, etwa im Rahmen der üblichen Hufpflege.
Gemäss der Druckschrift EP-A-1 210 873 ist ein Hufschuh insbesondere für ein Pferd mit einer Schale mit einer austauschbaren Sohle und mit einer zum Anlegen des Hufschuhs weg bewegbaren Rückwand versehen. Mittels zumindest eines Zugelementes ist diese Rückwand an der Schale festlegbar, wobei das Zugelement federnd ausgeführt und beidseitig an der Schale befestigbar ist. Nachteilig sind aber diese federnde Ausbildung des Zugelementes und diese seitlichen Befestigungen, welche den enormen Belastungen bei einem Galoppieren des Pferdes zu schwach ausgebildet sind und schlicht nicht standhalten können. Ebenso ist diese Polsterung, die in der anatomischen Einbuchtung oberhalb des Hufs positionierbar ist, nicht ausreichend, um einen dauerhaften Halt des Hufschuhs zu gewährleisten, weil der Huf aus dieser wie herausrollen kann bzw. es ist kein Halt zwischen der Rückwand und dem Huf gegeben.

Bei der Mehrzweckschutzabdeckung für Pferdehufe nach der Druckschrift WO-A-00/16614 ist ein Sohlenelement mit seitlich nach oben ragenden Kragen vorgesehen. Mit diesem Kragen sind Seitenklappen und vorne eine Abdeckung verbindbar. Zudem ist ein Fersenelement flexibel am hinteren Teil des Sohlenelementes angebracht, welches wenigstens ein Halteband aufweist, mittels dem ein Umfassen des Beins oberhalb des Hufs ermöglicht wird. Diese Hufabdeckung ist aufgrund der mehreren Bändern bzw. Klappen relativ aufwändig herzustellen und dabei ist aber trotzdem die Gefahr relativ gross, dass der Huf aus der Abdeckung herausgleitet und aufgrund des niederen Sohlenelementes nicht mehr zurückgeht, weil der Huf mit seiner unteren Kante bei dem oberen Rand dieses Sohlenelementes leicht aufstehen kann.

Ein Hufschuh der eingangs genannten Art ist in der EP 0 207 110 B1 geoffenbart. Der dort beschriebene Pferdehufschuh besteht aus einem hufeisenförmigen Bodenteil, einem dem Pferdefuss angepassten Vorderteil sowie einem Fersenteil, das an jeder Seite durch einen am Vorderteil anliegenden Streifen fortgesetzt ist. Vorne am Vorderteil ist auch eine Spannvorrichtung bestehend aus einem Drehknopf und zwei durch Drehen des Drehknopfes selbstsperrend verschiebbaren Schlingen angebracht. Es sind ferner am Fersenteil zwei Spanngurte vorgesehen, wobei das eine Gurtende in eine der Schlingen einhakt, während das andere Gurtende auf der gegenüberliegenden Seite unterhalb der dort befindlichen Schlinge festgehalten ist. Die Spanngurte verlaufen in Höhe der Spannvorrichtung nach hinten, wo sie an der Rückwand des Fersenteils über Kreuz durch zwei obere Schlaufen und zwei untere Schlaufen und dann nach vorne zur Befestigung unterhalb der Schlingen geführt sind.

Diese Ausbildung des Hufschuhs soll einen besonders guten Halt des Hufschuhs am Pferdehuf ermöglichen. Sie ist aber fertigungstechnisch sehr aufwendig und hat zudem den Nachteil, dass das An- und Ausziehen des Hufschuhs erst nach Lösen der Spanngurte und Verschieben der das Fersenteil bildenden Kappe möglich ist. Es ist ausserdem nachteilig, dass er wegen seines aufwendigen Aufbaus verhaltnismässig leicht ein Defekt auftreten kann.

Der Erfindung liegt demgegenüber die Aufgabe zugrunde, diese Nachteile zu vermeiden und einen Hufschuh der eingangs genannten Art zu schaffen, der leicht an- und ausziehbar ist, einen sicheren Halt bietet und ohne grossen Aufwand herstellbar ist.

Diese Aufgabe ist erfindungsgemäss durch die Merkmale des Anspruchs 1 gelöst.

Dadurch, dass die Wandung des Hufschuhs hinten in ca. der Hufbreite offen ist und dort mit wenigstens einer durch die Spannmittel verspannbaren Schliesslasche versehen ist, die im geschlossenen Zustand formschlüssig am Hinterteil des Hufes angelegt ist, ergibt sich ein äusserst einfaches Aufsetzen und Befestigen eines Hufschuhs an einem Huf.

Sehr vorteilhaft ist rückseitig eine Öffnung mit annähernd der Hufbreite und eine bei dieser Öffnung schwenkbare Schliesslasche vorgesehen, die um eine sich am Bodenteil befindliche Schwenkachse nach unten auf- und zuklappbar ist.

Der erfindungsgemässe Hufschuh besteht somit hauptsächlich aus einem leicht ein- oder zweiteilig herstellbaren Schuhkörper, dessen offene Hinterseite das An- und Ausziehen des Hufschuhs wesentlich erleichtert und dessen hintere Schliesslasche im geschlossenen Zustand die sichere Fixierung des Hufschuhs gewährleisten.

Es ist in diesem Sinne vorteilhaft, wenn die Schliesslaschen mit dem Hufrist angepassten Halbschalen versehen sind, die im geschlossenen Zustand formschlüssig an ihm direkt anliegen. Dabei sind diese Schliesslaschen um Eckkanten des Hufs geführt, um einen dreidimensionalen Formschluss zu erzielen.

Die Erfindung sieht weiterhin vor, dass die seitlichen Halbschalen mit Verstärkungsrippen versehen sind. Dadurch sind sie in Höhenrichtung stabil und können somit dauerhaft eine einwandfreie Fixierung sicherstellen.

Zum Andrücken der schwenkbaren Schliesslaschen gegen den Hufballen befindet sich vorne bei der Wandung des Hufschuhs ein Seildrehverschluss, mit dem ein oder mehr um den Schuh geführte Spannseile durch Drehen des Drehverschlusses festspannbar sind.

Für eine sichere Fixierung des Hufschuhs ist es hierbei von Vorteil, wenn der Seildrehverschluss mit zwei zwischen den Schliesslaschen über Kreuz aufgespannten Seilen versehen ist, wobei die Seile im Hufschuh vorzugsweise individuell so geführt sind, dass die Schliesskraft auch im oberen Bereich der Halbschalen wirksam ist, dabei die Schliesslaschen zugeklappt werden und einen erhöhten Halt sicherstellen.

Die Erfindung wird nachfolgend anhand eines Ausführungsbeispiels unter Bezugnahme auf die Zeichnung näher erläutert. Es zeigen:
- Fig. 1: eine Seitenansicht eines erfindungsgemässen Hufschuh;
- Fig. 2: eine Ansicht von oben des Hufschuhs nach Fig. 1;
- Fig. 3: schematischer Schnitt durch die Wandung des Hufschuhs;
- Fig. 4: schematischer Schnitt durch die Wandung des Hufschuhs;
- Fig. 5: einen vertikalen Schnitt durch die Wandung des Hufschuhs;
- Fig. 6: eine schematische Draufsicht einer Variante eines erfindungsgemässen Hufschuhs;
- Fig. 7: eine vergrösserte Ansicht des hinteren Teils des Hufschuhs gemäss Fig. 6; und
- Fig. 8: eine Seitenansicht einer weiteren Variante eines erfindungsgemässen Hufschuhs mit einer Schliesslasche in aufgeklappter Stellung.

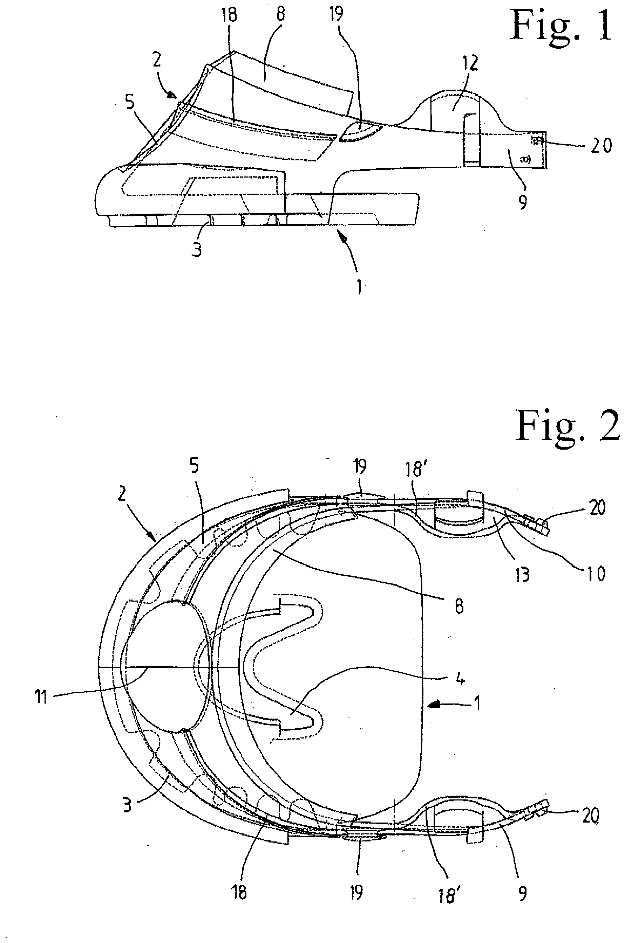

Der in Fig. 1 und Fig. 2 gezeigte Pferde-Hufschuh ist ein- oder mehrteilig herstellbar und besteht im Wesentlichen aus einem Bodenteil 1 und einer Wandung 2, beide aus Kunststoff-Spritzguss, deren Ausformung und Grösse dem Huf des jeweiligen Hufschuhträgers angepasst ist.

Es ist dabei in bekannter Weise zweckmässig, je nach Pferderasse oder Pferdegrösse verschiedene Schuhgrössen oder Modelle vorzusehen. Solche Hufschuhe können aber auch für andere Tierarten, wie Maultiere, Lastesel etc. hergestellt werden.

Der Bodenteil 1 hat ein Schuhprofil 3, 4 aus abriebfestem Material, beispielsweise einem Hartgummi, damit der Schuh insbesondere auf Asphalt einer geringen Abnützung ausgesetzt ist.

Erfindungsgemäss ist die Wandung 2 des Hufschuhs hinten beidseitig mit Schliesslaschen 9, 10 versehen, die seitlich relativ zum Huf 8 schwenkbar sind. Wie aus Fig. 2 ersichtlich, sind die Schliesslaschen 9, 10 im offenen Zustand annähernd parallel zur Mittelebene 11 des Hufes ausgerichtet, wobei dort die Wandung 2 des Hufschuhs hinten offen ist. Die Schliesslaschen 9, 10 weisen zusätzlich flexible Halbschalen 12 bzw. 13 auf, deren Innenrelief dem des Hufrists im Hinterteil des Hufes angepasst ist.

Zum Anziehen des Hufschuhs wird dieser auf den Huf nach Anheben des Fusses aufgestülpt, danach der Fuss abgesetzt und schliesslich die Befestigung des Hufschuhs durch Einschwenken der Schliesslaschen 9, 10 und Festspannen des Schuhs mit geeigneten Spannmitteln vorgenommen. Damit ist ein einfaches Handling beim Einfahren des Hufes in den Schuh gewährleistet und trotzdem ein leichtes Klemmen ermöglicht, welches dazu dient, dass der Hufschuh nicht gleich wieder abgleitet.

Es sind als Spannmittel zwei individuell betätigbare nicht näher gezeigte Spannseile vorgesehen, die einerseits an den Schliesslaschen 9, 10 eingehängt sind und andererseits mit einem vorne bei der Wandung 2 angebrachten Seildrehverschluss 18 durch Drehen spannbar sind. Die Spannseile sind um die Halbschalen 9, 10 und die Vorderwand 5 des Schuhs so geführt, dass ihre Spannkraft rund um den Schuh auch im Bereich der oberen Halbschalen wirksam wird, damit diese am Hufrist bei den Kanten einknicken bzw. einrasten und direkt anliegen und ihn so fixieren, dass der Huf gegen oben gesichert ist. Das ist besonders wichtig, wenn der Untergrund sehr nass und matschig ist, und sich dadurch ein Vakuum zwischen Bodenteil und Untergrund bilden kann, das grosse vertikale Kräfte verursacht. Dies hat dann zur Folge, dass der Hufschuh stecken bleibt und der Huf herausgleiten kann.

Anstelle des Seildrehverschlusses 17 können auch Zieh-, Ratschen-, Verschlüsse oder ähnliche Spannmittel mit oder ohne Übersetzungseinheit angewandt werden. Entscheidend ist, dass im geschlossenen Zustand der Hufschuh gleichmässig gegen den Huf mit der geeigneten Spannkraft aufgespannt wird, und dass sich die Halbschalen 12, 13 dabei formschlüssig am Hufhinterteil anlegen können, um den Hufschuh auch in senkrechter Richtung zu fixieren.

Es ist ebenfalls möglich, anstelle von Seilen etwa Bänder, Gurte oder ähnliche Spannmittel zu verwenden. Die Halbschalen 12, 13 könnten mit einem den Huf schonenden Polster oder an den Schliesslaschen 9, 10 mit zusätzlichen flexiblen Lappen versehen sein, die oben beim Hufballen nach innen drücken.

Zudem hat die Schale eine gewisse Vorspannung gegen den Huf nach innen, was wiederum bewirkt, dass der Hufschuh, bevor eine Spannung durch den Verschluss erzeugt wird, eine Eigenhaltekraft aufweist. Dies erhöht die Bedienerfreundlichkeit beim Anziehen des Schuhs.

Um eine gleichmässige Vorspannung noch zu unterstützen, ist der Seilverbindung zwischen den Lappen vorteilhaft ein Federelement zugeordnet. Damit können die Schalen leicht zusammen gezogen werden, bis die Vorspannung erreicht ist. Dieses Federelement kann zum Beispiel ein Textilgewebe sein, welches durch einen Gummiteil federnd streckbar ist. Zudem schützt dieses Gewebe die Seile vor unbeabsichtigtem Einhängen von herumliegenden Zweigen oder ähnlichem.

Die in der Wandung 2 vorgesehenen Verengungen in Vertikalrichtung betrachtet, bewirken zusätzlich, dass sich die Schale an den Huf optimal anpasst. Diese damit bewirkten Dämpfungswellen bzw. Pufferwellen können nach Bedarf am Umfang angeordnet werden und sind über die ganze Höhe des Schuhs angeordnet.

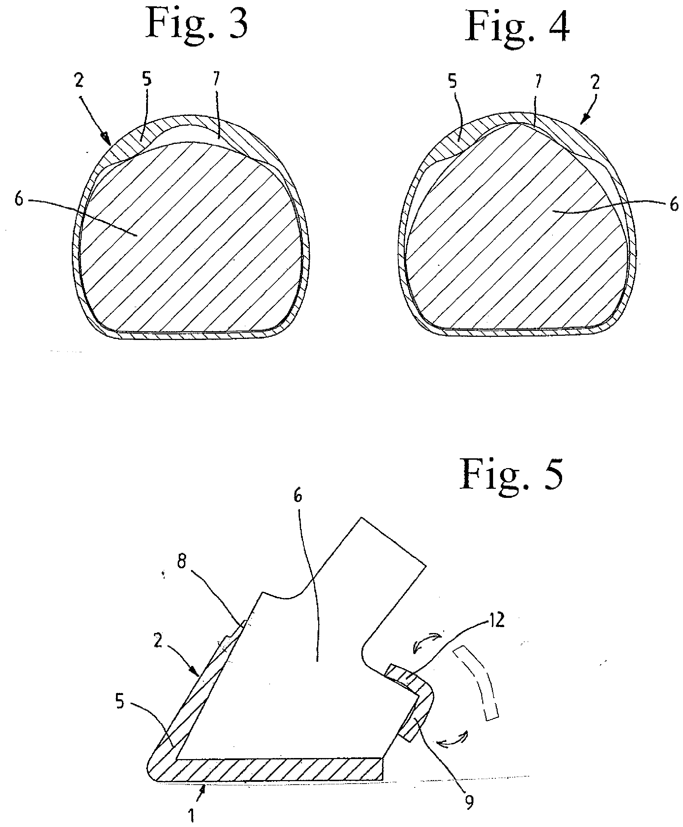

Wie aus Fig. 3 und Fig. 4 ersichtlich, ist die Vorderwand 5 der Wandung 2 ihrerseits so ausgebildet, dass sie sich eng an die vorderseitige Hornwand des Hufes 6 anlegen kann. Zu diesem Zwecke weist diese Vorderwand 5 innen ein welliges Profil 7 auf, welches ermöglicht, dass der Hufschuh für alle Arten und Formen von Hufen den bestmöglichsten Halt gibt, speziell im Bereich der möglichen Verdrehung gegenüber dem Huf. Durch die spezielle Formgebung der Vorderwand 5, wie in Fig.3 zu sehen ist, werden "Extremformen" von Hufen Rechnung getragen.

Gemäss Fig. 5 ist diese Vorderwand 5 der Wandung 2 oben mit einer flexiblen Dichtlippe 8 ausgestattet, die sich dichtend gegen den oberen Hufrand anschmiegen kann, damit keinerlei Schmutz in den Hufschuh gelangt. Diese Dichtlippe 8 ist in einem solchen Winkel angeordnet, dass sie die verschiedenen Durchmesser und Wandungs-Steigungen eines Hufes aufnehmen kann. Zudem erhöht diese die Verdrehungshaftung des Hufs im Schuh.

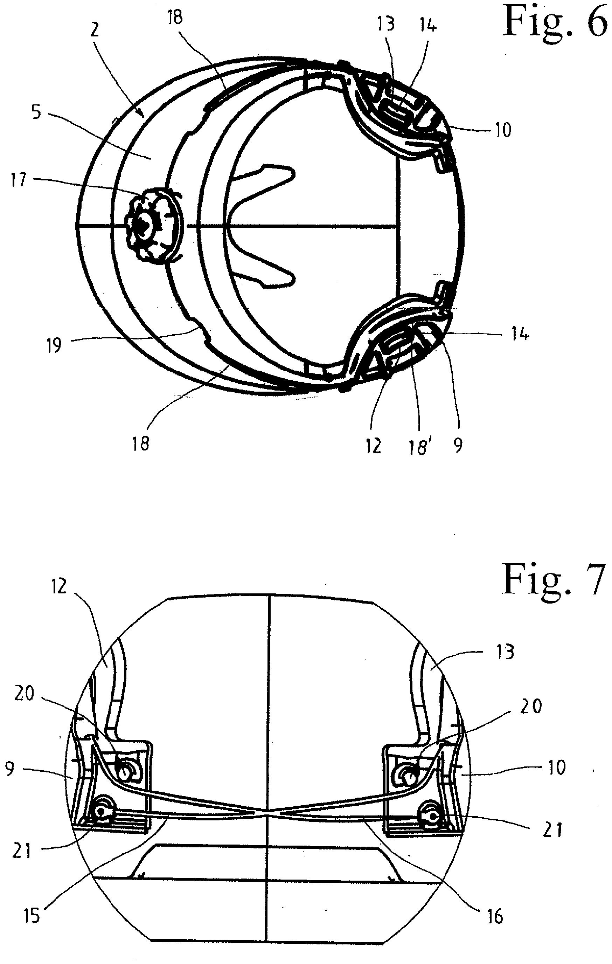

Fig. 6 und Fig. 7 zeigen eine ähnliche Variante eines Hufschuhs wie derjenige nach Fig. 1 und Fig. 2, so dass für die gleichen Bestandteile dieselben Bezugszeichen verwendet sind. Es sind nachfolgend einzig die Unterscheide erläutert.

Bei den Halbschalen 12, 13 der Schliesslaschen 9, 10 sind auf der Aussenseite Verstärkungsrippen 14 zugeordnet. Sie bewirken, dass die Halbschalen zumindest quer zu ihrer Längserstreckung des Schuhs stabil bleiben.

Die Spannseile 15, 16 sind in Führungskanälen 18, 18' mit Umlenkelementen 19, 20 sicher geführt. Im hinteren Schuhteil werden sie vorteilhaft über Kreuz die Schliesslaschen 9, 10 verspannend geführt, wobei sie jeweils mit dem einen Ende an einem Befestigungsteil 21 an jeweils einem Schliesslaschen angebracht sind.

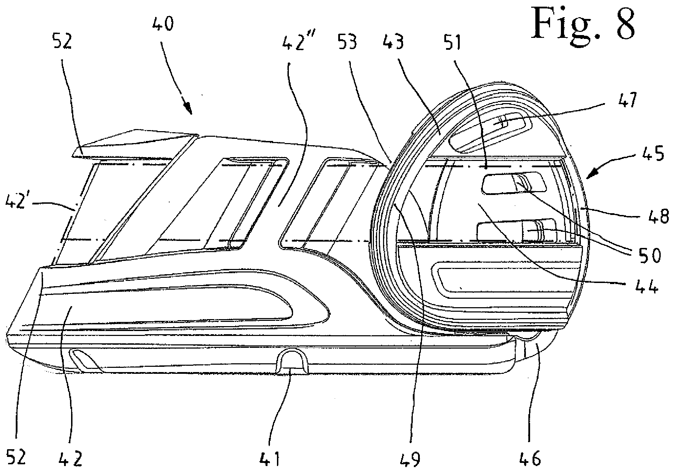

Fig. 8 zeigt eine weitere Variante eines vorzugsweise einteilig herstellbaren Hufschuhs 40 mit einem sohlenförmigen Bodenteil 41 und einer Wandung 42.

Erfindungsgemäss ist bei diesem Hufschuh 40 rückseitig eine Öffnung 53 mit annähernd der Hufbreite und eine bei dieser Öffnung 53 schwenkbare Schliesslasche 45 vorgesehen, die im geschlossenen Zustand durch Spannmittel 51 annähernd formschlüssig am Hinterteil des Hufes andrückbar ist. Diese Schliesslasche 45 ist schalenförmig ausgebildet und um eine sich am Bodenteil 41 befindliche horizontale Schwenkachse 46 nach unten auf- und zuklappbar. Sie schliesst im geschlossenen Zustand seitlich jeweils annähernd an die Wandung 42 an und sie weist am Aussenumfang eine Führungsfläche 44 und zueinander beabstandete Gurtlaschen 48, 49 auf, durch diese beispielsweise ein als Band ausgebildetes Spannmittel hindurchgezogen werden kann.

Ausserdem sind bei dieser schalenförmigen Schliessiasche 45 innenseitig Polsterschalen 50 mit Vorteil aus einem weichen Kunststoff ähnlich wie zum Beispiel bei Skischuhen befestigt. Diese Polsterschalen 50 erstrecken sich dabei annähernd über die gesamte Innenfläche der Schliesslasche 45. Damit ergibt sich eine weiche Anpressung der Schliesslasche am Hinterteil des Hufs und ein zusätzlicher Halt durch dieses formschlüssige Anschmiegen.

Vorteilhaft ist auch innenseitig des sohlenförmigen Bodenteils 41 eine nicht näher gezeigte plattenförmige Einlage aus einem speziellen Kunststoff mit einer stossdämpfenden Wirkung enthalten, welche sich zumindest über den Bereich mit der Hufeisenauflage erstreckt.

Der vorne und seitlich vorgesehenen Wandung 42 sind aussenherum ebenfalls eine Führungsfläche 42' und zueinander beabstandete Gurtlaschen 42" zugeordnet, durch welche das Spannmittel 51 durchführbar ist. Bei einem auf einen Huf aufgesetzten Schuh kann bei hochgeklappter Schliesslasche 45 eine Verspannung der Wandung 42 mit der rückseitigen Schfiesstasche 45 bewirkt werden. Mit Vorsprüngen 52 vorne bei der Wandung 42 ist sichergestellt, dass die Spannmittel zentriert sind und zudem dienen sie als Stossflächen gegen Schläge.

Nebst den Gurtlaschen 48, 49 und der Führungsfläche 44 sind zusätzliche Schräglaschen 47 auf der oberen Seite der Schliesslasche 45 an den beiden nach vorne gerichteten Enden 43 vorhanden, bei denen ein zweites Spannmittel befestigt werden kann, welches nebst dem um die mit einer Führungsfläche 42' versehenen Wandung 42 und um die Schliesslasche 45 führbaren Spannmittel 51, wie dieses strichpunktiert angedeutet ist, vorgesehen ist, um einen noch besseren Halt des Hufschuhs 40 am Huf zu bewerkstelligen. Diese Spannmittel 51 können durch Stoffbänder oder dergleichen mit entsprechenden Verschlüssen ausgebildet sein.

Der beschriebene Hufschuh ist in verschiedenen Modellen und Grössen herstellbar und für Pferde unterschiedlicher Tierrassen oder für ähnliche Huftiere benutzbar. Er zeichnet sich durch einen fertigungstechnisch einfachen Aufbau aus und hat den wesentlichen Vorteil, dass er ohne Aufwand an- und ausziehbar ist, ohne dass dafür besondere Einrichtungen oder Hilfsmittel nötig sind.

Die Erfindung ist mit den obigen Ausführungsbeispielen ausreichend dargetan. Anstelle der zwei Seile kann auch nur ein Seil, entsprechend umgelenkt, verwendet werden.

Die Schliesslaschen können im Endbereich sogenannte Abweiser als Abdeckung aufweisen, welche die Seile gegen das Abstreifen durch das hintere Huf schützen.

## Patentansprüche

1. Hufschuh für ein Huftier, vorzugsweise ein Pferd, mit einem Bodenteil (1, 41) und mit einer den Huf umgebenden Wandung (2, 42), die mit Spannmitteln (15, 16, 17, 51) zum Befestigen des Hufschuhs an den Huf versehen ist, wobei diese den Huf vorne und seitlich umgebende Wandung (2, 42) rückseitig eine Öffnung (53) mit annähernd der Hufbreite und wenigstens eine bei dieser Öffnung (53) auf- und zuklappbare Schliesslasche (9, 10, 45) vorgesehen ist, **dadurch gekennzeichnet, dass**
seitlich bei der Wandung (2) beidseitig je eine schwenkbare Schliesslasche (9, 10) mit an den Hufrist angepassten Halbschalen (12, 13) versehen sind oder eine schalenförmige Schliesslasche (41) vorgesehen ist, die um eine sich am Bodenteil (41) befindliche Schwenkachse nach unten auf- und zuklappbar ist, wobei die Halbschalen (12, 13) bzw. diese schalenförmige Schliesslasche (41) im geschlossenen Zustand durch die Spannmittel (15, 16, 17, 51) annähernd formschlüssig am Hinterteil des Hufes andrückbar ist.

2. Hufschuh nach Anspruch 1, **dadurch gekennzeichnet, dass** die schalenförmig ausgebildete Schliesslasche (45) im geschlossenen Zustand seitlich jeweils annähernd an die Wandung (42) anschliesst.

3. Hufschuh nach Anspruch 1 oder 2, **dadurch gekennzeichnet, dass** die Schliesslasche (45) am Aussenumfang eine Führungsfläche (44) und zueinander beabstandete Gurtlaschen (48, 49) für ein Spannmittel (51) aufweist.

4. Hufschuh nach Anspruch 3, **dadurch gekennzeichnet, dass** der vorne und seitlich umgebenden Wandung (42) aussenherum ebenfalls eine Führungsfläche (42') und zueinander beabstandete Gurtlaschen (42") zugeordnet sind, durch welche ein Spannmittel (51) durch die Laschen und Führungsflächen haltbar ist und eine Verspannung der Wandung und der rückseitigen Schliesslasche bei einem Huf bewirkt.

5. Hufschuh nach Anspruch 1, **dadurch gekennzeichnet, dass** den Halbschalen (12, 13) Verstärkungsrippen (14) zugeordnet sind, um die Stabilität derselben zumindest quer zu ihrer Längserstreckung zu erhöhen.

6. Hufschuh nach Anspruch 1, **dadurch gekennzeichnet, dass** die Schliesslaschen (9, 10) zusätzlich mit flexiblen Lappen, die oben beim Hufballen nach innen drücken, versehen sind.

7. Hufschuh nach Anspruch 1, **dadurch gekennzeichnet, dass** die Spannmittel (15, 16, 17) für die Schliesslaschen (9, 10) einen vorne bei der Wandung (2) angeordneten Seilzieh- oder Drehverschluss (17) aufweisen.

8. Hufschuh nach Anspruch 7, **dadurch gekennzeichnet, dass** die Spannmittel (15, 16, 17) zwei zwischen den Schliesslaschen (9, 10) über Kreuz spannbare Seile (15, 16) umfassen, welche durch den Seilzieh- oder Drehverschluss (17) betätigbar sind, wobei diese Seile (15, 16) mit dem einen Ende an einem Befestigungsteil (21) an jeweils einem Schliesslaschen angebracht sind.

9. Hufschuh nach Anspruch 8, **dadurch gekennzeichnet, dass** die Seile (15, 19) im Hufschuh vorzugsweise individuell so geführt sind, dass die Schliesskraft auch im oberen Bereich der Halbschalen (12, 13) wirksam ist.

10. Hufschuh nach einem der vorhergehenden Ansprüche 1 bis 9, **dadurch gekennzeichnet, dass** er ein- oder mehrteilig aus einem Kunststoff-Spritzguss hergestellt ist.

11. Hufschuh nach einem der vorhergehenden Ansprüche 1 bis 10, **dadurch gekennzeichnet, dass** die wenigstens eine schalenförmige Schliesslasche (9, 10, 45) innenseitig mit einer Polsterschale (50) versehen ist, die sich vorzugsweise annähernd über die gesamte Innenfläche der Schliesslasche 45 erstreckt.

12. Hufschuh nach einem der vorhergehenden Ansprüche 1 bis 11, **dadurch gekennzeichnet, dass** der Bodenteil (1) mit einem Schuhprofil (3) aus abriebfestem Material versehen ist.

13. Hufschuh nach einem der vorhergehenden Ansprüche 1 bis 12, **dadurch gekennzeichnet, dass** die Vorderwand (5) der Wandung (2) innen ein Profil (7) aufweist, das je nach dem Hufquerschnitt einen optimalen Halt erzeugt, insbesondere ein Verdrehen des Hufs im Schuh zu vermeiden.

14. Hufschuh nach einem der vorhergehenden Ansprüche 1 bis 13, **dadurch gekennzeichnet, dass** der schalenförmigen Schliesslasche (45) innenseitig Polsterschalen (50) vorzugsweise aus einem weichen Kunststoff zugeordnet sind, welche sich dabei annähernd über die gesamte Innenfläche der Schliesslasche (45) erstrecken.

15. Hufschuh nach einem der vorhergehenden Ansprüche 1 bis 14, **dadurch gekennzeichnet, dass** innenseitig des sohlenförmigen Bodenteils (41) eine flächige Einlage aus einem Kunststoff mit einer stossdämpfenden Wirkung enthalten ist.

## Claims

1. A hoof shoe for a hoofed animal, preferably a horse, with a bottom part (1, 41) and with a wall (2, 42) that encloses the hoof, which wall is provided with tightening means (15, 16, 17, 51) for fastening the hoof shoe to the hoof, whereby this wall (2, 42) enclosing the hoof at the front and sides is provided with an opening (53) at the back with approximately the width of the hoof and at least one closure flap (9, 10, 45), which can be opened and closed at this opening (53), **characterised in that**
a respective pivotable closure flap (9, 10) with half-shells (12, 13) matched to the hoof instep is provided on both sides at the side of the wall (2) or a shell-shaped closure flap (41) is provided, that can be opened and closed towards the bottom about a swivel axis located on the bottom part (41), whereby the half-shells (12, 13) respectively this shell-shaped closure flap (41) in the closed state can be pressed approximately with a form fit onto the rear part of the hoof by the tightening means (15, 16, 17, 51).

2. The hoof shoe according to Claim 1, **characterised in that** in the closed state the closure flap (45) that is made in the form of a shell respectively almost adjoins the wall (42) at the side.

3. The hoof shoe according to Claim 1 or 2, **characterised in that** the closure flap (45) has on the outer circumference a guide surface (44) and two strap flaps (48, 49), spaced apart from one another, for a tightening means (51).

4. The hoof shoe according to Claim 3, **characterised in that** a guide surface (42') and strap flaps (42") spaced apart from one another are also assigned to the wall (42), that encloses the hoof at the front and sides, by means of which a tightening means (51) can be held by the straps and guide surfaces and tensioning of the wall and of the rear-side closure flap is brought about on a hoof.

5. The hoof shoe according to Claim 1, **characterised in that** reinforcement ribs (14) are assigned to the half-shells (12, 13) in order to increase the stability of the latter at least transversely to their longitudinal extension.

6. The hoof shoe according to Claim 1, **characterised in that** the closure flaps (9, 10) are additionally provided with flexible tabs that press inwards at the top on the bulb of the hoof.

7. The hoof shoe according to Claim 1, **characterised in that** the tightening means (15, 16, 17) have a cable pull or rotary closure (17) for the closure flaps (9, 10) at the front on the wall (2).

8. The hoof shoe according to Claim 7, **characterised in that** the tightening means (15, 16, 17) comprise two cables (15, 16) that can be tensioned crosswise between the closure flaps (9, 10) and which can be actuated by the cable pull or rotary closure (17), whereby these cables (15, 16) being attached with one end to a fastening part (21) on one respective closure flap.

9. The hoof shoe according to Claim 8, **characterised in that** the cables (15, 19) are preferably guided individually within the hoof shoe so that the closure force is also effective in the upper region of the half-shells (12, 13).

10. The hoof shoe according to any of the preceding Claims 1 to 9, **characterised in that** it is produced in one or more parts by plastic injection moulding.

11. The hoof shoe according to any of the preceding Claims 1 to 10, **characterised in that** the at least one shell-shaped closure flap (9, 10, 45) is provided on the inside with a cushioning shell (50) that preferably extends over almost the entire inner surface of the closure flap (45).

12. The hoof shoe according to any of the preceding Claims 1 to 11, **characterised in that** the bottom part (1) is provided with a shoe profile (3) made of abrasion-resistant material.

13. The hoof shoe according to any of the preceding Claims 1 to 12, **characterised in that** the front wall (5) of the wall (2) has a profile (7) on the inside that generates an optimal hold depending on the hoof cross-section, in particular in order to prevent rotation of the hoof within the shoe.

14. The hoof shoe according to any of the preceding Claims 1 to 13, **characterised in that** on the inside cushioning shells (50), preferably made of a soft plastic, are assigned to the shell-shaped closure flap (45), which cushioning shells extend here over almost the entire inner surface of the closure flap (45).

15. The hoof shoe according to any of the preceding Claims 1 to 14, **characterised in that** a flat insert made of a plastic with an impact absorbing effect is contained on the inside of the sole-shaped bottom part (41).

## Revendications

1. Chaussure pour un ongulé, de préférence pour un cheval, comprenant une partie (1, 41) de fond et une paroi (2, 42), qui entoure le sabot et qui est pourvue de moyens (15, 16, 17, 51) de serrage pour fixer la chaussure au sabot, cette paroi (2, 42) entourant le sabot à l'avant et latéralement étant pourvue du côté arrière d'une ouverture (53) ayant à peu près la largeur du sabot et d'au moins une languette (9, 10, 45) de fermeture relevable et rabattable sur cette ouverture (53), **caractérisée en ce que**
latéralement à la paroi (2) de part et d'autre, respectivement une languette (9, 10) de fermeture pivotante est munie de demi-coques (12, 13) adaptées au coup de pied du sabot ou il est prévu une patte (41) de fermeture en forme de coque, qui peut se relever et se rabattre vers le bas autour d'un axe de pivotement se trouvant sur la partie (41) de fond, les demi-coques (12, 13) ou cette patte (41) de fermeture en forme de coque pouvant, à l'état fermé, par les moyens (15, 16, 17, 51) de serrage, être serrée à peu près à complémentarité de forme sur la partie arrière du sabot.

2. Chaussure suivant la revendication 1, **caractérisée en ce que** la languette (42) de fermeture constituée en forme de coque se raccorde, à l'état fermé, latéralement respectivement à peu près à la paroi (42).

3. Chaussure suivant la revendication 1 ou 2, **caractérisée en ce que** la languette (45) de fermeture a, sur le pourtour extérieur, une surface (44) de guidage et a des languettes (48, 49) de courroie à distance l'une de l'autre pour un moyen (51) de serrage.

4. Chaussure suivant la revendication 3, **caractérisé en ce que**, à la paroi (42) entourant vers l'avant et latéralement, sont associées, autour extérieurement, également une surface (42') de guidage et des languettes (42") de courroie à distance les unes des autres, par lesquelles un moyen (51) de serrage peut être maintenu par les languettes et les surfaces de guidage et provoquer un serrage de la paroi et de la languette de fermeture du côté arrière sur un sabot.

5. Chaussure suivant la revendication 1, **caractérisée en ce que** des nervures (14) de renfort sont associées aux demi-coques (12, 13) pour augmenter leur stabilité, au moins transversalement à leur étendue longitudinale.

6. Chaussure suivant la revendication 1, **caractérisée en ce que** les languettes (9, 10) de fermeture sont pourvues supplémentairement de volets souples, qui, en haut, appuient vers l'intérieur sur le boulet.

7. Chaussure suivant la revendication 1, **caractérisée en ce que** les moyens (15, 16, 17) de serrage des languettes (9, 10) de fermeture ont une fermeture (17) par traction de câble ou par demi-tour disposée en avant sur la paroi (2).

8. Chaussure suivant la revendication 7, **caractérisée en ce que** les moyens (15, 16, 17) de serrage comprennent, entre les languettes (9, 10) de fermeture, des câbles (15, 16) pouvant être serrés en croix, qui peuvent être actionnés par la fermeture (17) à traction de câble ou à demi-tour, ces câbles (15, 16) étant mis, par l'une de leurs extrémités, sur une partie (21) de fixation de respectivement une languette de fermeture.

9. Chaussure suivant la revendication 8, **caractérisée en ce que** les câbles (15, 19) sont guidés dans la chaussure, de préférence individuellement, de manière à ce que la force de fermeture soit efficace aussi dans la partie supérieure des demi-coques (12, 13).

10. Chaussure suivant l'une des revendications précédentes 1 à 9, **caractérisée en ce qu'**elle est fabriquée en une partie ou en plusieurs parties en un produit moulé par injection en matière plastique.

11. Chaussure suivant l'une des revendications précédentes 1 à 10, **caractérisée en ce que** la au moins une languette (9, 10, 45) de fermeture en forme de coque est pourvue, du côté intérieur, d'une coque (50) de rembourrage, qui s'étend, de préférence, à peu près sur toute la surface intérieure de la languette (45) de fermeture.

12. Chaussure suivant l'une des revendications précédentes 1 à 11, **caractérisée en ce que** la partie (1) de fond est pourvue d'un profil (3) de chaussure en matériau résistant à l'usure.

13. Chaussure suivant l'une des revendications précédentes 1 à 12, **caractérisée en ce que** la surface (5) avant de la paroi (2) a, à l'intérieur, un profil (7), qui produit, suivant la section transversale du sabot, un maintien optimum en empêchant notamment une torsion du sabot dans la chaussure.

14. Chaussure suivant l'une des revendications précédentes 1 à 13, **caractérisée en ce que**, à la languette (45) de fermeture en forme de coque, sont associées, du côté intérieur, des coques (50) de rembourrage, de préférence en une matière plastique souple, qui s'étendent à peu près sur toute la surface intérieure de la languette (45) de fermeture.

15. Chaussure suivant l'une des revendications précédentes 1 à 14, **caractérisée en ce que**, du côté intérieur de la partie (41) de fond en forme de semelle, est contenu un insert plat en une matière plastique ayant une effet d'amortissement des chocs.
